**Europäisches Patentamt**

**European Patent Office**

**Office européen des brevets**

(19)

(11) Veröffentlichungsnummer: **0 062 928**
**B1**

(12) # EUROPÄISCHE PATENTSCHRIFT

(45) Veröffentlichungstag der Patentschrift:
13.11.85

(51) Int. Cl.⁴: **F 02 P 5/04**

(21) Anmeldenummer: **82103428.7**

(22) Anmeldetag: **23.04.82**

(54) Anordnung zur Erzeugung eines Auslöseimpulses.

(30) Priorität: **22.07.81 DE 3128922**

(43) Veröffentlichungstag der Anmeldung:
**20.10.82 Patentblatt 82/42**

(45) Bekanntmachung des Hinweises auf die Patenterteilung:
**13.11.85 Patentblatt 85/46**

(84) Benannte Vertragsstaaten:
**AT BE CH FR GB IT LI NL SE**

(56) Entgegenhaltungen:
**EP - A - 0 023 960**
**DE - A - 2 634 239**

**ELEKTRONIK, Heft 9, September 1977, München, G. KLASCHE "Digital gesteuertes Motorzündsystem", Seiten 64-68**

(73) Patentinhaber: **Atlas Fahrzeugtechnik GmbH, Eggenpfad 26, D-5980 Werdohl (DE)**

(72) Erfinder: **Knüfelmann, Manfred, Hörder Strasse 69, D-4000 Düsseldorf (DE)**
Erfinder: **Brandner, Burkhard, Bornstrasse 2, D-5980 Werdohl (DE)**
Erfinder: **Blauhut, Reinhold, Eggenpfad 24, D-5980 Werdohl (DE)**

(74) Vertreter: **Hassler, Werner, Dr., Postfach 17 04 Asenberg 62, D-5880 Lüdenscheid (DE)**

**Beschreibung**

Die Erfindung betrifft eine Anordnung zur Erzeugung eines Auslöseimpulses, der innerhalb einer Periode eines mit veränderlicher Periodendauer ablaufenden Bewegungsvorgangs um eine von der Periodendauer und anderen Kenngrößen abhängige Phase gegenüber einer Nullphase verzögert ist, wobei beginnend mit der Nullphase neben einem Nullimpuls Winkelimpulse erzeugt werden, deren Impulsfrequenz der Periodendauer umgekehrt proportional ist und wobei die Winkelimpulse in einen Zähler eingespeist werden und wobei ferner während eines Festzeitfensters innerhalb jeder Periode Korrekturwerte erzeugt werden.

Die DE-PS 1 917 389 und die Zusatzpatentschrift 2 010 999 beschreibt eine Anordnung, die während einer Periodendauer eine Bezugsfolge und außerdem eine davon getrennte Auslösefolge sowie zusätzlich Hilfsimpulse benötigt. Die Bezugsfolge wird im wesentlichen während eines festeingestellten Zeitfensters gezählt und liefert eine drehzahlabhängige Korrektur. Die Auslösefolge legt schließlich die Phasenlage des Auslöseimpulses gegenüber einer Bezugsphase fest. Es werden auch weitere Korrekturimpulse für eine lastabhängige Korrektur vorgeschlagen. Nachteilig ist hierbei, daß die Bezugsfolge und die Auslösefolge durch gesonderte Hilfsimpulse ausgewählt werden müssen. Zwischen der Bezugsfolge und der Auslösefolge liegt auch ein zeitlicher Abstand vor.

Die DE-AS 1 909 525 beschreibt eine Anordnung, bei der während eines Periodenabschnitts sog. Setzimpulse in eine Zählschaltung eingezählt werden. Anschließend wird mit Hilfe von Zählimpulsen der Auslöseimpuls erzeugt. Hier erweist es sich als nachteilig, daß die Setzimpulse von einer von dem Bewegungsvorgang unabhängigen Impulsquelle kommen, so daß sich Störungen ergeben können, die schwer übersehbar und korrigierbar sind.

Aufgabe der Erfindung ist eine solche Anordnung der genannten Art, daß eine einzige Winkelimpulsfolge ausgewertet werden kann und daß außer einem Bezugsimpuls zur Festlegung einer Bezugsphase keine weiteren Steuerimpulse erforderlich sind.

Diese Aufgabe wird nach der Erfindung durch folgende Merkmale gelöst:

a)  die Winkelimpulse schalten während jeder Periode den Eingang eines Phasenadreßzählers weiter, an dessen Ausgang ein dem jeweiligen Winkelimpuls zugeordnetes Mehrbitadreßsignal zur Verfügung steht;

b)  das Mehrbitadreßsignal liegt an einem Eingang eines Korrekturwertspeichers an, an dessen Ausgang ein Mehrbitkorrektursignal zur Verfügung steht;

c)  der Ausgang des Korrekturwertspeichers ist durch den Ausgangsimpuls eines Zeitfensterkreises absperrbar;

d)  die Winkelimpulse liegen an einem gesteuerten Verdoppler an, dessen Verdopplereingang durch ein Bit des Mehrbitkorrektursignals gesteuert wird;

e)  der Ausgang des gesteuerten Verdopplers liegt an einem Zähler mit einem Unterdrückereingang an, der von einem zweiten Bit des Mehrbitkorrektursignals gesteuert wird.

Die Anordnung nach der Erfindung wertet die Winkelimpulse aus, die kontinuierlich nacheinander auftreten und ausgewertet werden. Es ist daneben lediglich ein Nullimpuls erforderlich, der eine Bezugsphase festlegt und jeweils die Anordnung auf die Anfangswerte einstellt. Dieser Nullimpuls löst ein Zeitfenster aus, während dessen Dauer eine Abwandlung der Winkelimpulse möglich ist. Die Abwandlung der Winkelimpulse erfolgt entsprechend den in einem Korrekturwertspeicher eingegebenen Korrekturwerten für jeden einzelnen Winkelimpuls und somit jedes einzelne Phaseninkrement. Diese Korrekturwerte werden über einen Adreßzähler angesteuert. Da der Korrekturwertspeicher als Matrixspeicher ausgebildet ist, ist eine zusätzliche Ansteuerung mit lastabhängigen Signalen oder mit anderen von Betriebsgrößen abhängigen Signalen möglich, so daß die Korrekturwerte nicht nur eine drehzahlabhängige, sondern auch eine lastabhängige und überhaupt betriebsabhängige Korrektur ermöglichen. Die Korrekturwerte legen fest, ob ein Winkelimpuls doppelt, normal oder gar nicht gezählt wird. Dadurch kann jedem Winkelimpuls eine von den anderen Impulsen unabhängige Korrektur zugeordnet werden. Jeder Winkelimpuls verschiebt den Auslösezeitpunkt um ein Inkrement des Systems. Die Erfindung ermöglicht die Verwertung von Auslösekennlinien beliebiger Form.

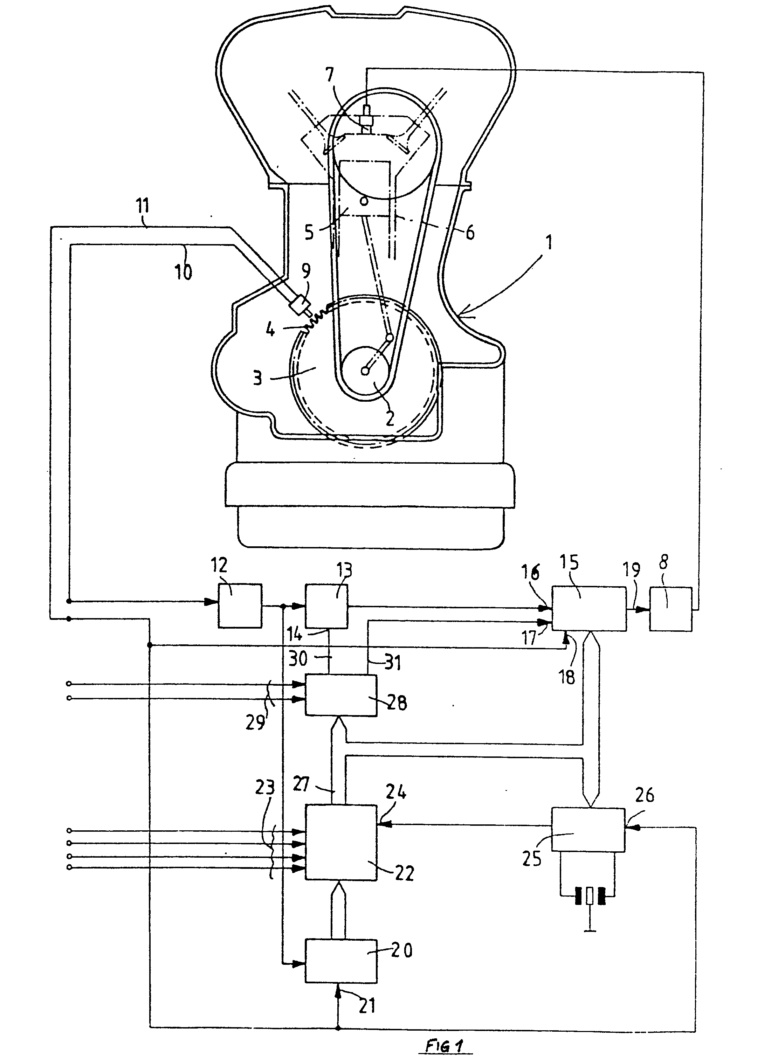

Eine Ausführungsform der Erfindung wird im folgenden unter Bezugnahme auf die Zeichnung erläutert, die als Beispiel einen Verbrennungsmotor in schematischer Darstellung zusammen mit einem Blockschaltbild der Anordnung nach der Erfindung zeigt.

Die Figur zeigt in schematischer Darstellung einen Verbrennungsmotor 1. Auf einer Kurbelwelle 2 sitzt ein Schwungrad 3 mit einem Zahnkranz 4, der als Zahnkranz für den Anlasser dient. Mit der Kurbelwelle 2 sind jeweils die Kolben 5 gekoppelt, die sich in Zylindern 6 bewegen. Innerhalb des Zylinderkopfes ist jeweils mindestens eine Zündkerze 7 angebracht, die von einer Zündstufe 8 einen Zündimpuls erhält.

Dem Zahnkranz 4 steht ein Winkelimpulsgeber 9 gegenüber, der auf einer Leitung 10 Winkelimpulse entsprechend dem Vorübergang sämtlicher Zähne des Zahnkranzes 4 abgibt, so daß die Impulsfrequenz dieser Winkelimpulse der Periodendauer des Umlaufs des Schwungrades 3 und damit der Kurbelwelle 2 umgekehrt proportional ist. Andererseits wird auf einer Leitung 11 ein Nullimpuls beim Vorübergang eines Bezugzahnes des Zahnkranzes 4 abgegeben, der der Nullphase der Drehung der Kurbelwelle 2 entspricht. Der Nullzahn trägt eine besondere Markierung zur Erzeugung dieses Nullimpulses.

Die Anordnung zur Erzeugung eines Auslöseimpulses umfaßt einen Impulsverdoppler 12, der die Winkelimpulse verdoppelt, so daß die Impulsflanken der Winkelimpulse ausgewertet werden können. An den Impulsverdoppler 12 schließt sich ein gesteuerter Verdoppler 13 an, der einen Verdopplereingang 14 aufweist. Der gesteuerte Verdoppler 13 ist nur dann im Sinne einer Impulsverdopplung wirksam, wenn an dem Verdopplereingang 14 ein »1«-Signal anliegt. Die Ausgangsimpulse des gesteuerten Verdopplers 13 liegen an einem Zähleingang 16 eines Zählers 15 an. Der Zähler 15 hat ferner einen Unterdrückereingang 17, über den die Zählung gesperrt werden kann, und außerdem einen Rückstelleingang 18, an dem der Nullimpuls auf der Leitung 11 anliegt.

Der Zähler 15 gibt auf der Leitung 19 einen Impuls ab, wenn der Zählstand einen voreingestellten Wert, insbesondere den Wert Null hat. Die Leitung 19 führt zu der Zündstufe 8 und bewirkt unmittelbar die Auslösung des Zündimpulses für eine Zündkerze 7. Es ist hier nur eine Zündstufe 8 für eine Zündkerze 7 dargestellt. Die Zündimpulse für die Zündkerzen der weiteren Zylinder lassen sich in bekannter Weise aus dem einen Zündimpuls ableiten.

Die Ausgangsimpulse des Impulsverdopplers 12 liegen auch an einem Adreßzähler 20 an, der einen Rückstelleingang 21 aufweist. Am Ausgang des Adreßzählers steht jeweils entsprechend dem Zählstand ein Mehrbitadreßsignal bereit, das unmittelbar ein Maß für die Phase der Drehbewegung ist. Das Mehrbitadreßsignal beaufschlagt den Adreßeingang eines Korrekturwertspeichers 22. Der Korrekturwertspeicher 22 enthält in den einzelnen Speicheradreßplätzen Mehrbitkorrekturwerte, die den Adressen zugeordnet sind, worauf noch im einzelnen eingegangen wird. Der Korrekturwertspeicher weist einen weiteren Mehrbiteingang 23 auf, über den lastabhängige Adreßsignale eingegeben werden können. Außerdem ist ein Sperreingang 24 vorhanden, der vom Ausgang eines Zeitfensterkreises 25 beaufschlagt wird. Der Zeitfensterkreis 25 besitzt einen Auslöseeingang 26 und gibt jeweils nach Auftreten eines Auslösesignals ein Ausgangssignal einer vorgegebenen Zeitdauer zur Festlegung des genannten Zeitfensters ab. Der Auslöseeingang 26 ist ebenfalls an die Leitung 11 angeschlossen, die den Nullimpuls führt.

Am Ausgang des Korrekturwertspeichers stehen Mehrbitkorrektursignale auf einer Datenschiene 27 zur Verfügung. In einem Ausführungsbeispiel handelt es sich um 8-Bitkorrektursignale. Da von der Gesamtzahl der Bit normalerweise nur ein geringer Anteil benötigt wird, können innerhalb der Mehrbitkorrektursignale Untergruppen ausgewertet werden, die verschiedenen Kennlinienfeldern zugeordnet sind und z. B. über einen Multiplexer 28 angesteuert werden. Die Betätigung des Multiplexers 28 erfolgt über eine Eingangsschiene 29 auf der z. B. temperaturabhängige Steuersignale übertragen werden. Die Datenschiene 27 ist auch zu dem Zeitfensterkreis 25 und dem Zähler 15 geführt. Entsprechende Datenbits ermöglichen eine adreßabhängige Verstellung des Zeitfensters und andererseits eine Rückstellung des Zählers 15, um bei Überschreiten einer Maximaldrehzahl die Auslösung eines Zündimpulses zu unterdrücken.

Von dem Multiplexer 28 wird jeweils am Ausgang auf den Leitungen 30 und 31 ein 2-Bitsignal zur Verfügung gestellt. Die Leitung 30 ist mit dem Verdopplereingang 14 des gesteuerten Verdopplers verbunden. Wenn das Signal auf der Leitung 30 den Binärwert »0« hat, so erfolgt keine Impulsverdopplung in dem gesteuerten Verdoppler 13, wenn dieses Signal den Binärwert »1« hat, erfolgt eine Impulsverdopplung. Das Signal auf der Leitung 31 liegt schließlich an dem Unterdrückereingang 17 des Zählers 15 an. Der Binärwert »0« entspricht der normalen Funktion des Zählers 15, während der Binärwert »1« am Unterdrückereingang 17 die Zählung der am Zähleingang 16 einlaufenden Impulse unterdrückt.

Die Funktion der beschriebenen Anordnung ist folgende: Im Betrieb des Verbrennungsmotors 1 treten in Abhängigkeit von der Drehung der Kurbelwelle bei jeder Umdrehung Nullimpulse auf der Leitung 11 und Winkelimpulse auf der Leitung 10 auf. Der jeweilige Nullimpuls während einer Umdrehung der Kurbelwelle dient als Bezugsimpuls und stellt den Zähler 15 und den Adreßzähler 20 auf die voreingestellten Anfangswerte zurück und löst außerdem den Zeitfensterkreis 25 aus, so daß derselbe einen Rechteckimpuls einer vorgegebenen Zeitdauer an den Sperreingang 24 des Korrekturwertspeichers 22 abgibt, um dadurch ein Zeitfenster festzulegen, währenddessen der Ausgang des Korrekturwertspeichers 22 aktiv ist.

Bei der weiteren Drehung der Kurbelwelle 2 treten die Winkelimpulse auf der Leitung 10 auf und werden in dem Impulsverdoppler 12 verdoppelt. Die verdoppelten Winkelimpulse beaufschlagen den Adreßzähler 20, der auf seiner Ausgangsleitung ein Mehrbitadreßsignal abgibt, das die momentane Phasenlage der Kurbelwelle 2 anzeigt. Dieses Mehrbitadreßsignal ruft den entsprechenden Speicherplatz des Korrekturwertspeichers 22 auf. In diesem Korrekturwertspeicher 22 sind jeweils 2-Bitkorrektursignale gespeichert. Man kann in dem Korrekturwertspeicher Korrektursignale entsprechend drehzahlabhängigen Zündkennlinien speichern. Außerdem erlaubt der Mehrbiteingang 23 mit Hilfe von Signalen über den Lastzustand des Verbrennungsmotors den Zugriff auf lastabhängige Korrektursignale. Diese Korrektursignale stehen auf der Datenschiene 27 zur Verfügung. Da jeder Speicherplatz ein 8-Bitsignal speichern kann, kann man innerhalb eines 8-Bitwortes vier 2-Bitkorrektursignale anordnen.

In dem Multiplexer 28 werden aus dem 8-Bitkorrektursignal aufgrund eines temperaturabhängigen Auswahlsignals jeweils 2-Bitkorrektursignale ausgewählt, die auf den Leitungen 30 und 31 anstehen. Diese Korrektursignale kennzeichnen drei Korrekturzustände: Zunächst einmal können beide Signale den Binärwert »0« haben. Dann erfolgt keine Verdopplung in dem gesteuerten Verdoppler 13, jedoch eine normale Zählung des am Zähleingang 16 anliegenden Signals. Dies bedeutet, daß der Winkelimpuls ungehindert in den Zähler 15 hindurchtritt. — Die Leitung 30 führt ein Signal mit dem Binärwert »1«, die Leitung 31 ein Signal mit dem Binärwert »0«. Dieses bedeutet, daß in dem gesteuerten Verdoppler 13 eine Impulsverdopplung erfolgt und daß der Zähler 15 die am Zähleingang 16 anliegenden Signale zählt. Es wird also durch die Impulsverdopplung und Zählung ein Zusatzimpuls erzeugt. — Schließlich kann die Leitung 31 den Binärwert »1« führen, wobei der Binärwert auf der Leitung 30 beliebig sein kann. In diesem Fall wird die Zählung im Zähler 15 unterdrückt, so daß der betreffende Winkelimpuls ausfällt.

Sobald der Zeitfensterimpuls auf dem Sperreingang 24 beendet ist, werden die Ausgangswerte auf den Leitungen 30 und 31 auf die Binärwerte »0« und »1« eingestellt, so daß nach Ablauf des Zeitfensters die in dem Impulsverdoppler verdoppelten Winkelimpulse unverändert gezählt werden, bis der voreingestellte Zählstand des Zählers 15 erreicht ist und auf der Leitung 19 ein Auslöseimpuls zur Einschaltung des Zündkreises 18 erscheint.

## Patenansprüche

1. Anordnung zur Erzeugung eines Auslöseimpulses, der innerhalb einer Periode eines mit veränderlicher Periodendauer ablaufenden Bewegungsvorgangs um eine von der Periodendauer und anderen Kenngrößen abhängige Phase gegenüber einer Nullphase verzögert ist, wobei beginnend mit der Nullphase neben einem Nullimpuls Winkelimpulse erzeugt werden, deren Impulsfrequenz der Periodendauer umgekehrt proportional ist, wobei die Winkelimpulse in einen Zähler eingespeist werden und wobei ferner während eines Festzeitfensters innerhalb jeder Periode Korrekturwerte erzeugt werden, gekennzeichnet durch folgende Merkmale:

a) die Winkelimpulse schalten während jeder Periode den Eingang eines Phasenadreßzählers (20) weiter, an dessen Ausgang ein dem jeweiligen Winkelimpuls zugeordnetes Mehrbitadreßsignal zur Verfügung steht;

b) das Mehrbitadreßsignal liegt an einem Eingang eines Korrekturwertspeichers (22) an, an dessen Ausgang ein Mehrbitkorrektursignal zur Verfügung steht;

c) der Ausgang des Korrekturwertspeichers (22) ist durch den Ausgangsimpuls eines Zeitfensterkreises (23) absperrbar;

d) die Winkelimpulse liegen an einem gesteuerten Verdoppler (13) an, dessen Verdopplereingang (14) durch ein Bit des Mehrbitkorrektursignals gesteuert wird;

e) der Ausgang des gesteuerten Verdopplers (13) liegt an einem Zähler (15) mit einem Unterdrückereingang (17) an, der von einem zweiten Bit des Mehrbitkorrektursignals gesteuert wird.

2. Anordnung nach Anspruch 1, dadurch gekennzeichnet, daß dem gesteuerten Verdoppler (13) ein Impulsverdoppler (12) vorgeschaltet ist und daß die Ausgangsimpulse des Impulsverdopplers (12) an dem Phasenadreßzähler (20) anliegen.

3. Anordnung nach Anspruch 1 oder 2, dadurch gekennzeichnet, daß die den Nullimpuls führende Leitung (11) mit dem Auslöseeingang (26) des Zeitfensterkreises (25) und mit dem Rückstelleingang (18) des Zählers (15) verbunden ist.

4. Anordnung nach einem der Ansprüche 1 bis 3, dadurch gekennzeichnet, daß die Ausgangsschiene (27) des Korrekturwertspeichers an einen Multiplexer (28) angeschlossen ist, in dessen Eingangsschiene (29) Zusatzsteuersignale eingegeben werden.

## Claims

1. Arrangement for generating a trigger pulse delayed within a period of motion of variable cycle time, the phase lag relative to a zero phase being dependent on the cycle time and other parameters, a zero pulse and angle pulses starting at zero phase being generated, the pulse frequency being inversely proportional to the cycle time, the angle pulses being fed into a counter and correcting data being generated within every period during a constant-time window, characterized by the following features:

a) during every period the angle pulses are counted by a phase address counter (20) the output of which provides a multi-bit address signal assiged to the respective angle pulse;

b) the multi-bit address signal is fed into the input of a correction data memory (22) the output of which provides a multi-bit correction signal;

c) the output of the correction data memory (22) can be disabled by the output pulse of a time window circuit (25);

d) the angle pulses are fed into a controlled pulse duplicator (13) the duplicating input (14) of which is controlled by one bit of the multi-bit correction signal;

e) the output of the controlled duplicator (13) is connected to a counter (15) with a disable input (17) controlled by a second bit of the multi-bit correction signal.

2. Arrangement according to claim 1, characterized in that a pulse duplicator (12) is arranged to drive the controlled pulse duplicator (13) and that the output pulses of the pulse duplicator (12) drive the phase address counter (20).

3. Arrangement according to claim 1 or 2, characterized in that the line (11) carrying the zero pulse is connected to the trigger input (26) of the time window circuit (25) and to the reset input (18) of the counter (15).

4. Arrangement according to one of the claims 1 to 3, characterized in that the output bus (27) of the correction data memory is connected to a multiplexer (28) the input lines (29) of which are controlled by additional control signals.

## Revendications

1. Agencement pur la production d'une impulsion de déclenchement, qui est retardée à l'intérieur d'une période d'une opération de mouvement se déroulant avec une durée de période variable, d'une phase fonction de la durée de période et d'autres grandeurs caractéristiques par rapport à une phase nulle, tandis qu'en partant de la phase nulle, en plus d'une impulsion nulle, on produit des impulsions d'angle dont la fréquence d'impulsion est inversement proportionnelle à la durée de période, les impulsions d'angle étant conservées dans un compteur et en outre, au cours d'une fenêtre de temps fixe dans les limites de chaque période, des valeurs de correction sont engendrées, caractérisé par les caractéristiques suivantes:

a) les impulsions d'angle font avancer pendant chaque période l'entrée d'un compteur d'adresse de phase (20), à la sortie duquel est disponible un signal d'adresse à bits multiples associé à chaque impulsion d'angle;

b) le signal d'adresse à bits multiples est appliqué à une entrée d'une mémoire de valeur de correction (22), à la sortie de laquelle est disponible un signal de correction à bits multiples;

c) la sortie de la mémoire de valeur de correction (22) peut être bloquée par l'impulsion de sortie d'un circuit de fenêtre de temps (25);

d) les impulsions d'angle sont appliquées à un doubleur commandé (13) dont l'entrée de doublage (14) est commandée par un bit du signal de correction à bits multiples;

e) la sortie du doubleur commandé (13) est appliquée à un compteur (15) avec une entrée de suppression (17) qui est commandée par un second bit du signal de correction à bits multiples.

2. Agencement suivant la revendication 1, caractérisé en ce que le doubleur commandée (13) est précédé par un doubleur d'impulsions (12), et en ce que les impulsions de sortie du doubleur d'impulsion (12) sont appliquées au compteur d'adresse de phase (20).

3. Agencement suivant la revendication 1 ou 2, caractérisé en ce que la ligne (11) portant l'impulsion nulle est reliée à l'entrée de déclenchement (26) du circuit de fenêtre de temps (25) et à l'entrée de remise à état initial (18) du compteur (15).

4. Agencement suivant l'une des revendications 1 à 3, caractérisé en ce que le bus de sortie (27) de la mémoire de valeur de correction est raccordé à un multiplexeur (28), dans le bus d'entrée (29) duquel sont introduits des signaux de commande supplémentaires.

0 062 928

FIG 1

7